# DEMANDE DE BREVET EUROPEEN

(11) **EP 1 193 337 A2**
(43) Date de publication de la demande: **03.04.2002**
(21) Numéro de dépôt: 01402548.0
(22) Date de dépôt: 02.10.2001
(51) Int. Cl.: D04H 13/00, B44F 1/06, A41D 31/02, B32B 5/02

(54) **Matériau textile à effet de transparence pour vêtement ou pour ameublement.**

(30) Priorité: 02.10.2000 FR 0012544
(71) Demandeur: Da Silva Ataide, Teresa Maria, 75018 Paris (FR)
(72) Inventeur: Da Silva Ataide, Teresa Maria, 75018 Paris (FR)

(57) **Abrégé**

Matériau textile utilisable pour vêtements et ameublement , du type stratifié , constitué de trois couches , formé d'une nappe textile ( 3 ), disposée entre deux tissus ( 1 ) et ( 2 ), caractérisé en ce qu'il comporte en partie intérieure ( 3 ) une nappe de fibres ou fils , ou rubans , tissés ou non , répartis de façon irrégulière de manière à présenter une densité de fibres , ou fils , ou rubans , irrégulière , ajourée , et en ce que au moins le tissu ( 1 ) constituant la face extérieure, est transparent ou semi-transparent.

## Description

La présente invention a pour objet un matériau textile pour vêtements et également pour l'ameublement qui présente une certaine transparence, au moins partielle, et des effets visuels aléatoires

Les matériaux transparents généralement utilisés dans ces domaines présentent une certaine régularité et les effets de surface sont assez limités.

L'objet de l'invention est de fournir un matériau textile stratifié , permettant une utilisation plus polyvalente dans les domaines de l'habillement et de l'ameublement .

Dans le domaine des tissus à trois couches, il existe déjà les matériaux du type matelassés . Dans ce type de matériau , une nappe de fibres naturelles ou synthétiques, ou de duvet , est placée entre deux tissus et maintenue par des coutures , selon des motifs ordonnés . Dans ces matériaux , l'effet est obtenu par la teinte ou par le motif imprimé dans le tissu formant l'enveloppe, et notamment la face extérieure de cette enveloppe .

L'invention se distingue en ceci qu'elle vise à obtenir un effet visuel dû au matériau de garnissage, disposé en arrière d'un tissu transparent ou semi-transparent, au moins du côté extérieur.

L'effet visuel est obtenu en partie par le " dit " garnissage , alors que jusqu'à présent, le rôle de ce garnissage était de fournir un effet de relief ou de gonflant . Ainsi la présente invention à pour objet un matériau textile utilisable pour vêtements et ameublement du type stratifié constitué de trois couches formées d'une nappe textile, disposée entre deux tissus ces élements étant reliés entre eux et il comporte en partie intérieure , une nappe de fibres ou fils, ou rubans , tissés ou non , répartis de façon irrégulière de manière à présenter une densité de fibres , ou fils , ou rubans , irrégulière , ajouré , à partir d'une valeur pouvant être nulle dans certaines zones et en ce qu'au moins le tissu constituant la face extérieure , est transparent ou semi transparent .

Selon d'autres caractéristiques , les fibres du garnissage intérieure , son du type non tissées et sont disposées au hasard , sans orientation définie , parallèlement au plan du tissu ou disposées de façon verticales , transversales ou obliques, dans le sens de la longueur.

Ces dites fibres , peuvent être en lin ou du même type , comme par exemple les fibres de bananier, de sisal, de coton , qui sont des fibres végétales . Elles peuvent être aussi animales , comme la laine , le crin , le poil de fourrure, ou des fibres synthétiques . Les fibres doivent être de préférence longues , supérieures à un centimètre .

Si les fibres du garnissage sont en laine , ou du même type , elles peuvent s'enrouler sur elles mêmes , créant en surface un effet de relief, dans le cas où la section des mailles relatives au tissu extérieur, est supérieure à la section des fibres du garnissage, tandis que le tissu du côté intérieur, présente lui , une section de mailles inférieure à celle des fibres.

Le garnissage peut être constitué , d'un tissu , par exemple en soie , ou de la tapisserie , présentant des ajoures obtenus soit au tissage soit mécaniquement comme par exemple par étirage ou découpe , soit chimiquement, soit par l'action d'un rayonnement, par exemple le laser, supprimant certains fils de trame , ou alors constitué de rubans par exemple le raphia , la corde , ou même du tissu semi-transparent, découpé ou déchiré, répartis à plat de façon aléatoire.

Les trois couches sont reliées entre elles par couture , disposée de manière régulière ou de façon ponctuelle, avec du fil synthétique de type invisible , notamment le fil " Nylon " , ou éventuellement teintée , et de la même teinte que celle du tissu , soit au contraire , par l'utilisation d'un fil opaque , visible , de sorte qu'il dessine des figures géométriques ou pas , sur le matériau .

Les tissus transparents ou semi-transparents , extérieurs ou intérieurs , doivent présenter, de préférence, une section de maille inférieure à la section des fibres, si on ne veut pas l'effet de relief, dû à l'enroulement des fibres sur elles-mêmes, et ils peuvent être des tissus naturels ou synthétiques , comme par exemple le tissu organza, la dentelle, la mousseline, le voile, le tulle, la soie, la maille .

Concernant encore les tissus , transparents ou semi-transparents , extérieurs et inférieurs , ils peuvent être de type différent, le tissu extérieur présentant une transparence supérieure à celui du tissu inférieur, ou un aspect différent obtenu par exemple par un froissure , permettant déjà d'obtenir par lui-même , un effet de transparence irrégulière , dû à une superposition du tissu sur lui-même aux endroits concernés , ou par l'utilisation d'une dentelle , ou autre du même type .

Le tissu côté face extérieure , est de préférence , de teinte contrastée , par rapport à celle du garnissage , l'un des deux étant clair, tandis que l'autre est de teinte sombre .

Selon une autre caractéristique , le matériau textile , peut-être constitué d'une succession de panneaux , reliés de façon adjacente, les uns aux autres , par exemple par couture , et comportant chacun un matériau de garnissage de nature différente et par exemple de teinte contrastée , et même le tissu extérieur peut être différent, de manière à réaliser une sorte de "patchwork".

Une description plus détaillée va être fait en référence aux dessins joints qui représentent :

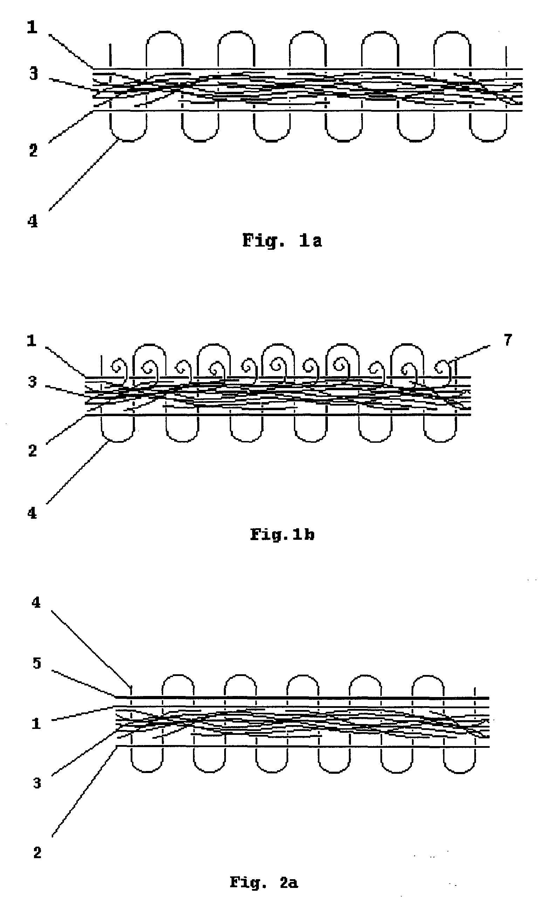

Fig.1-a , une vue en coupe du matériau textile stratifié.
Fig-1-b , une vue en coupe du matériau textile , stratifié , dans le cas où la section des mailles constituant le tissu extérieur ( 1 ) , est supérieure à celle des fibres , et dans ce cas, les fibres passent à travers les mailles et créent en surface un effet de relief ( 7 ).

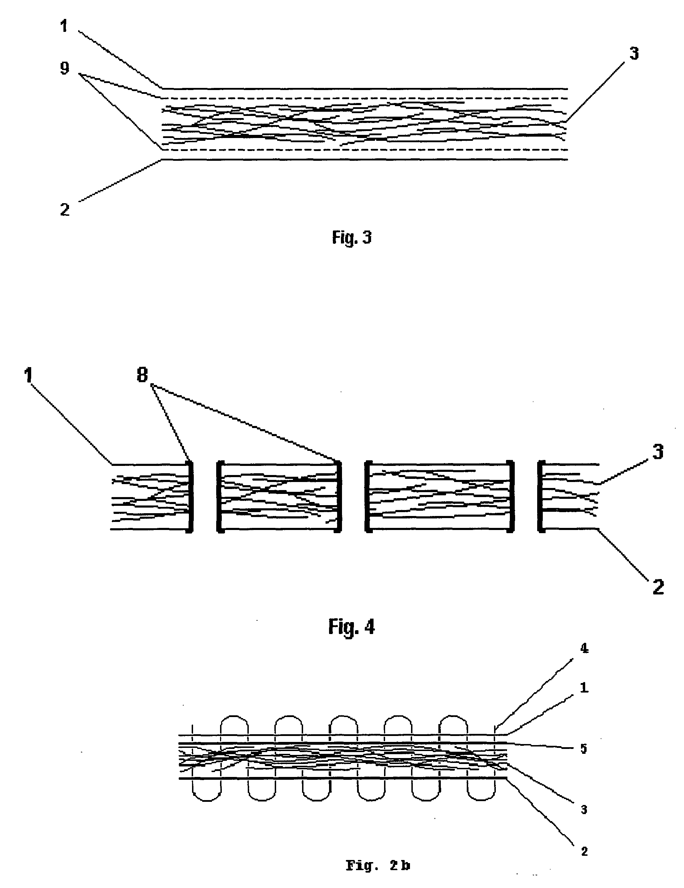

Fig.2-a et 2-b , deux variantes en coupe du matériau textile stratifié , avec ruban rapporté à l'extérieur, ou sous la couche transparente ou semie-transparente extérieure.
Fig.3 , une vue en coupe du matériau textile stratifié , où les deux tissus ( 1 ) et ( 2 ), sont liés par un film de colle ( 9 ), appliqués entre chaque faces de la nappe ( 3 ) et les tissus intérieurs et extérieurs , ou alors , sur une seule face de la nappe ( 3 ) et le tissu extérieur ( 1 ), ou intérieur ( 2 ).
Fig.4 , une vue en coupe , du matériau textile stratifié , où les deux tissus ( 1 ) et ( 2 ) et le garnissage ( 3 ), sont liés par des rivets ( 8 ).

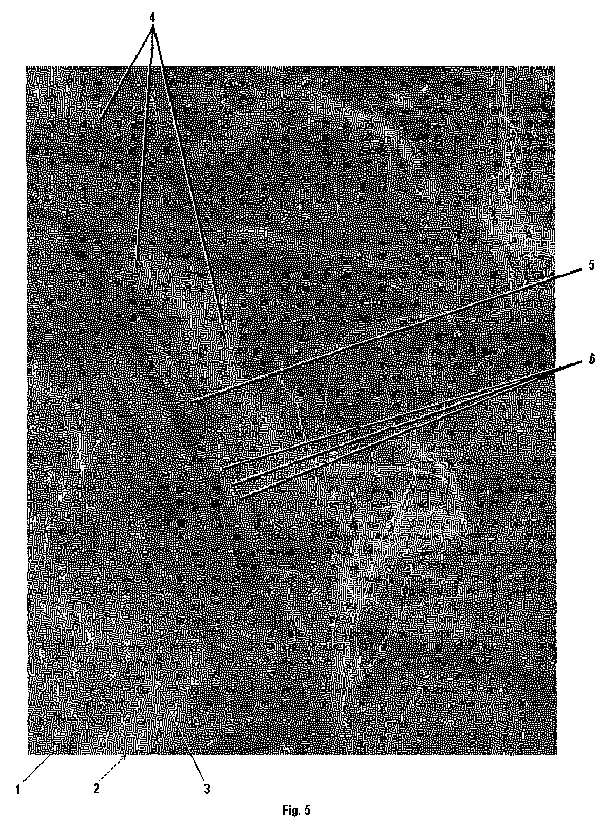

Fig.5, une vue de face du matériau textile selon l'invention , correspondant aux 2-a et 2-b.

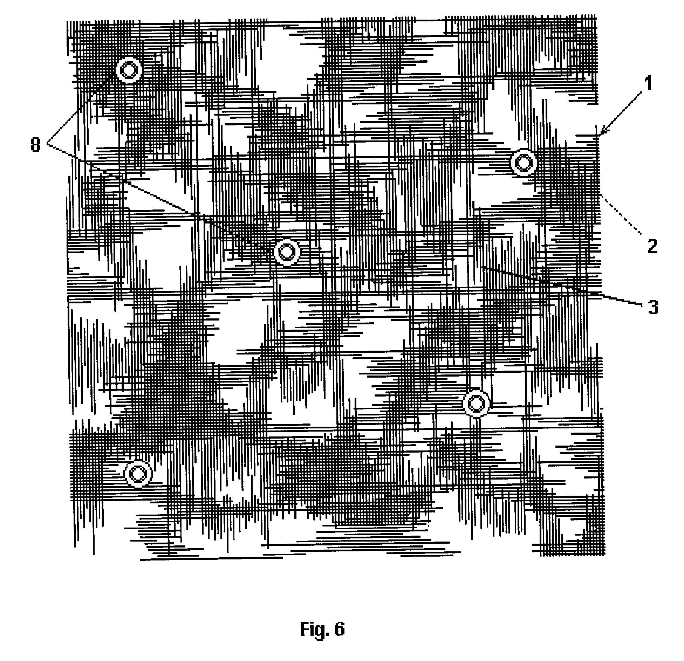

Fig.6 , vue de face du matériau textile stratifié , ou la nappe textile ( 3 ), est constituée de tissu ajouré irrégulièrement , en faisant apparaître sur le contour, des ajoures , et les extrémités des fibres faisant saillies.

En référence à ces dessins , le matériau textile comporte un tissu stratifié à trois couches , formé d'un garnissage ( 3 ) disposé entre deux tissus ( 1 ) et ( 2 ) maintenus de façon non limitative par couture ( 4 ), dans lequel l'innovation consiste en ce que la nappe intérieure ( 3 ), constituée de fibres , non tissées , ou tissés ajourées , ou autres du même type , est visible des deux côtés ou d'un seul, selon que le tissu de la face extérieure ( 1 ) est transparent ou semi-tranparent, et le tissu de la face intérieure ( 2 ) est opaque , contrairement aux matériaux stratifiés déjà existants , par exemple dans les matelassés où la nappe intérieure ( 3 ) constituée de fibres est cachée par les tissus d'enveloppe , parce que cette couche à une fonction utilitaire par exemple pour garder la chaleur, et non à effet esthétique dû à la transparence .

Le matériau stratifié est donc formé de trois couches . Les revêtements extérieur ( 1 ) et inférieur ( 2 ) sont deux tissus naturels et/ou synthétiques, de même type ou non , et ce tissu est transparent ou semi-transparent , au moins au niveau du revêtement extérieur ; une des deux couches , celle face inférieur ( 2 ) , pouvant être opaque ; dans ce cas, les deux tissus ( 1 ) et ( 2 ) sont de type différent .

Lorsque les tissus utilisés en couche extérieure ( 1 ) et inférieure ( 2 ) sont tous deux transparents et de type différent, le tissu extérieur ( 1 ) présente soit une transparence supérieure à celle du tissu inférieur ( 2 ), soit un aspect différent, par exemple obtenu par froissure , par une dentelle ou autre , comme par exemple du tissu peint ou autres du même type .

La nappe intérieure ( 3 ) est constituée de fibres naturelles ou synthétiques non tissées , ou tissu ajouré , ou bande de tissu déchiré , ou découpé, ou tapisserie ajourée , ou du fil , ou du ruban , ou autre .

Dans cette nappe intérieure ( 3 ), les fibres non tissées peuvent être orientées suivant leur longueur dans le sens de la largeur, de la longueur ou obliquement , soit , au contraire , disposées au hasard sans orientation définie .

Dans cette nappe intérieure ( 3 ) , les fibres non tissées peuvent être disposées de manière désordonnée ou à effets entremêlés , ou au contraire ordonnées . Cette nappe intérieure ( 3 ) peut être plus dense à certains endroits qu'à d'autres , et les fibres peuvent être plus concentrées à certains endroits, tandis que d'autres peuvent, ponctuellement, ne pas en comporter .Cette nappe intérieure ( 3 ) , peut être composée de tissu ajouré , comme par exemple un tissu en soie déchiré mécaniquement , et il peut présenter à certains endroits des froissures et/ou pliages de manière à présenter des épaisseurs différentes, et un aspect visuel irrégulier.

Selon les modes particuliers de réalisation :
- les trois parties ( 1 ), ( 2 ) et ( 3 ) sont liées par couture , ou par collage , par rivetage , par agrafage , ou autre moyen de liaison . Si les trois couches sont liées par couture , elles sont cousues ensembles régulièrement ou non avec un fil ( 4 ) naturel ou synthétique , lequel forme la couture , et ce même fil ( 4 ) peut être soit du type visible , soit du type invisible . Ce même fil ( 4 ), s'il est visible , peu dessiner des figures géométriques en largeur, longueur ou obliquement , ou encore de façon aléatoire.
- Dans la couture côté extérieur, on peut rajouter un ruban ou gros fil ( 5 ), opaque , extérieur, de sorte qu'il soit visible , en matériau naturel ou synthétique , tels raphia , bande de tissu déchiré , fil plastique , ruban , corde , laine , ou n'importe quel autre type de fil de largeur différente et supérieure à celle du fil de couture ( 4 ).
- Ce gros "fil" ( 5 ) ou ruban peut être disposé dans la partie intérieur, juste au dessus de la nappe intérieure ( 3 ), et, de cette façon , sera pris par la couture ( 4 ) de la même manière que la nappe intérieure ( 3 ), pour former en plus des dessins géométriques , ordonnés , ou des dessins aléatoires , entre le tissu extérieur ( 1 ) et la nappe intérieure ( 3 ), et visibles à l'extérieure ou des deux côtés , si le tissu de la face inférieure ( 2 ) est transparent ou semi transparent.
- Le même gros "fil" ( 5 ), ou ruban peut, en variante , être disposé , appliqué extérieurement au tissu extérieur ( 1 ). Il est alors pris dans la couture faite par le fil ( 4 ), qui suit le trajet de ce gros fil ( 5 ), ou ruban , de manière à former des dessins géométriques ou aléatoires . Il peut au contraire être maintenu par une couture spécifique ( 6 ), ou par un autre moyen de liaison mécanique ou chimique , comme par exemple des rivets.
- les trois couches , sont reliées par collage invisible , notamment par fusion ponctuelle d'au moins une des couches , ou par apport de colle sous forme continue , appliquée ou pulvérisée à l'aide d'un aérosol, à collage à froid , ou d'un film "thermocollant".

## Revendications

1. Matériau textile utilisable pour vêtements et ameublement, du type stratifié , constitué de trois couches formé d'une nappe textile ( 3 ), disposée entre deux tissus ( 1 ) et ( 2 ), ces éléments étant reliés entre eux , **caractérisé en ce qu'**il comporte en partie intérieure ( 3 ) une nappe de fibres ou fils , ou rubans , tissés ou non , répartis de façon irrégulière de manière à présenter une densité de fibres , ou fils , ou rubans, irrégulière , ajourée , et **en ce que** au moins le tissu ( 1 ) constituant la face extérieure , est transparent ou semi transparent .

2. Matériau textile , selon la revendication 1 , **caractérisé en ce que** les fibres du garnissage intérieure ( 3 ), sont du type non tissées et , sont disposées au hasard sans orientation définie , parallèlement au plan du tissu .

3. Matériau textile , selon la revendication 1, **caractérisé en ce que** les fibres du garnissage intérieur ( 3 ) sont en laine ou du même type , et s'enroulent sur elles-mêmes , créant en surface un effet de relief, dans le cas ou la section des mailles relative au tissu extérieur ( 1 ), est supérieure à la section des fibres du garnissage ( 3 ), tandis que le tissu côté intérieur ( 2 ), présente lui , une section de maille inférieure à celle des fibres ( 3 ). Les fibres sont orientées dans le sens de leurs longueurs , par exemple de façon verticale , transversale ou oblique .

4. Matérau textile , selon la revendication 1 , **caractérisé en ce que** , la nappe de garnissage ( 3 ), est constituée d'un tissu , par exemple en soie , ou de la tapisserie , présentant des ajours obtenus soit au tissage , soit mécaniquement , par exemple par étirage ou découpe , ou chimiquement , ou par l'action d'un rayonnement, par exemple laser, supprimant certains fils de trame .

5. Matériau textile , selon la revendication ( 1 ), **caractérisé en ce que** la nappe du garnissage ( 3 ), est constituée de ruban , par exemple raphia , ou tissu transparent ou pas , découpé ou déchiré , répartis à plat de façon aléatoire .

6. Matériau textile , selon l'une quelconque des revendications précédentes , **caractérisé en ce que** les trois couches ( 1 ) , ( 2 ) et ( 3 ) sont reliées entre elles par couture avec du fil synthétique de type invisible ( 4 ) , disposée de manière régulière ou de façon ponctuelle .

7. Matériau textile , selon l'une quelconque des revendications 1 , 2 , 4 , 5 , 6 , **caractérisé en ce que** les tissus transparents ou semi transparents ( 1 ) et ( 2 ), présentent une section de maille inférieure à la section des fibres ( 3 ), et sont constitués par exemple de tissu mousseline , dentelle , voile , organza , tulle, soie, maille .

8. Matériau textile , selon l'une quelconque des revendications de 1 à 7 , **caractérisé en ce que** les tissus transparents ou semi-transparents ( 1 ) et ( 2 ) sont de type différents , le tissu extérieur ( 1 ) présentant une transparence supérieure à celui du tissu inférieur ( 2 ), ou un aspect différent obtenu par exemple par une froissure ou par une dentelle , lui procurant une tranparence irrégulière.

9. Matériau textile selon l'une quelconque des revendications de 1 à 5 , **caractérisé en ce que** les trois couches , sont reliées par collage invisible, notamment par fusion ponctuelle d'au moins une des couches , ou par apport de colle sous forme continue , appliquée ou pulvérisée à l'aide d'un aérosol, à collage à froid , ou d'un film " thermocollant ".

10. Matériau textile , selon l'une quelconque des revendications précédentes , **caractérisé en ce que** le tissu côté face extérieure ( 1 ), est de teinte contrastée par rapport à celle du garnissage ( 3 ), l'un des deux étant clair tandis que l'autre est de teinte sombre.
